# EUROPEAN PATENT APPLICATION

(11) **EP 3 933 431 A1**
(43) Date of publication of application: **05.01.2022**
(21) Application number: 20762189.7
(22) Date of filing: 26.02.2020
(51) Int. Cl.: G01S 7/03, B60R 13/00, H01Q 1/42

(54) **RADAR COVER**

(30) Priority: 28.02.2019 JP 2019036035
(71) Applicant: Faltec Co., Ltd., Kawasaki-shi, Kanagawa 212-0013 (JP)
(72) Inventor: YANAGI, Daisuke, Kawasaki-shi, Kanagawa 212-0013 (JP)
(74) Representative: Troesch Scheidegger Werner AG
(86) International application number: PCT/JP2020/007588
(87) International publication number: WO 2020/175507

(57) **Abstract**

A radar cover (10) includes a transparent member (11), a base member (13) that is disposed on a back surface of the transparent member (11) and supports the transparent member (11), and an inner emblem (12) that is disposed between the transparent member (11) and the base member (13), in which the inner emblem (12) includes an island portion (12a) of which a periphery is surrounded by a part of the base member (13) when viewed from a laminating direction, a peripheral portion (12b) that is disposed apart from the island portion (12a) when viewed from the laminating direction, and a connecting portion (12c) that is embedded in the base member (13) and connects the island portion (12a) and the peripheral portion (12b) when viewed from the laminating direction.

## Description

### [Technical Field]

The present invention relates to a radar cover.

Priority is claimed on Japanese Patent Application No. 2019-036035, filed on February 28, 2019, the content of which is incorporated herein by reference.

### [Background Art]

In recent years, a radar unit that detects obstacles around a vehicle using radio waves such as millimeter waves has been mounted on the vehicle. Such a radar unit is disposed inside the vehicle in a state of being covered from a front side by a radar cover on which an identification mark such as an emblem is formed. The radar cover needs to be able to transmit radio waves to be transmitted and received in the radar unit without attenuating them as much as possible. On the other hand, in order to enhance the texture of the identification mark such as the emblem formed on the radar cover, it is necessary to apply a metallic luster to a part of the radar cover. Therefore, in the radar cover, for example, a colored core provided with a vapor deposition layer or a sputtering layer made of indium or the like capable of transmitting radio waves is disposed between a transparent member disposed on a front surface side of the radar cover and a support member disposed on a back surface side of the radar cover (see Patent Document 1).

### [Citation List]

### [Patent Document]

[Patent Document 1] Japanese Unexamined Patent Application, First Publication No. 2011-46183

### [Summary of Invention]

### [Technical Problem]

In the radar cover as described above, a printing layer for forming a design may be provided on a back surface of the transparent member. In order to provide the printing layer, it is naturally necessary to provide a process of forming the printing layer during a process of manufacturing the radar cover. Therefore, in order to reduce the number of processes of forming the printing layer, it is considered that the support member is exposed through the transparent member in a region where the printing layer has been conventionally provided, and a design is formed by the support member instead of the printing layer.

However, for example, in a case where a region to which a metallic luster is applied has a small island portion of which an entire circumference is surrounded by the support member, it is necessary to provide an individual colored core for each island portion, and it is necessary to manufacture and control a large number of colored cores as needed.

The present invention has been made in view of the above circumstances, and an object of the present invention is to easily form an island-shaped colored region of which a periphery is surrounded by a support member and which has a metallic color or the like in a radar cover.

### [Solution to Problem]

According to a first aspect of the present invention, a radar cover includes a transparent member, a support member that is disposed on a back surface of the transparent member and supports the transparent member, and a colored core that is disposed between the transparent member and the support member, in which the colored core includes an island portion of which a periphery is surrounded by a part of the support member when viewed from a laminating direction of the transparent member, the colored core, and the support member, a peripheral portion that is disposed apart from the island portion when viewed from the laminating direction, and a connecting portion that is embedded in the support member and connects the island portion and the peripheral portion when viewed from the laminating direction.

According to a second aspect of the present invention, in the first aspect, the connecting portion connects a back surface of the island portion and a back surface of the peripheral portion, and is disposed closer to a back surface of the support member than the back surface of the island portion and the back surface of the peripheral portion.

According to a third aspect of the present invention, in the first or second aspect, a plurality of the connecting portions are connected to one island portion.

According to a fourth aspect of the present invention, in any one of the first to third aspects, a surface position of the support member located outside the peripheral portion and a surface position of the support member located between the peripheral portion and the island portion are different from each other when viewed from the laminating direction.

### [Advantageous Effects of Invention]

According to the radar cover according to the aspects of the present invention, the colored core includes the connecting portion that is embedded in the support member and connects the island portion and the peripheral portion when viewed from the laminating direction of the transparent member, the colored core, and the support member. Therefore, the island portion and the peripheral portion are connected in a region that is not visible from the outside, and the island portion can be integrated with the peripheral portion. Therefore, according to the radar cover according to the aspects of the present invention, it is not necessary to manufacture and manage an individual colored core for each island portion, and in the radar cover, it is possible to easily form an island-shaped colored region of which a periphery is surrounded by the support member and which has a metallic color or the like.

### [Brief Description of Drawings]

Fig. 1A is a front view of a radiator grill including a radar cover according to an embodiment of the present invention.
Fig. 1B is an enlarged front view of the radar cover according to the embodiment of the present invention.
Fig. 2 is a cross-sectional view taken along the line A-A of Fig. 1B.
Fig. 3 is a schematic view showing a method of manufacturing the radar cover according to the embodiment of the present invention.
Fig. 4 is a schematic cross-sectional view showing a modification example of the radar cover according to the embodiment of the present invention.
Fig. 5 is an enlarged front view showing the modification example of the radar cover according to the embodiment of the present invention.
Fig. 6 is a schematic cross-sectional view showing the modification example of the radar cover according to the embodiment of the present invention.

### [Description of Embodiments]

Hereinafter, an embodiment of a radar cover according to the present invention will be described with reference to the drawings.

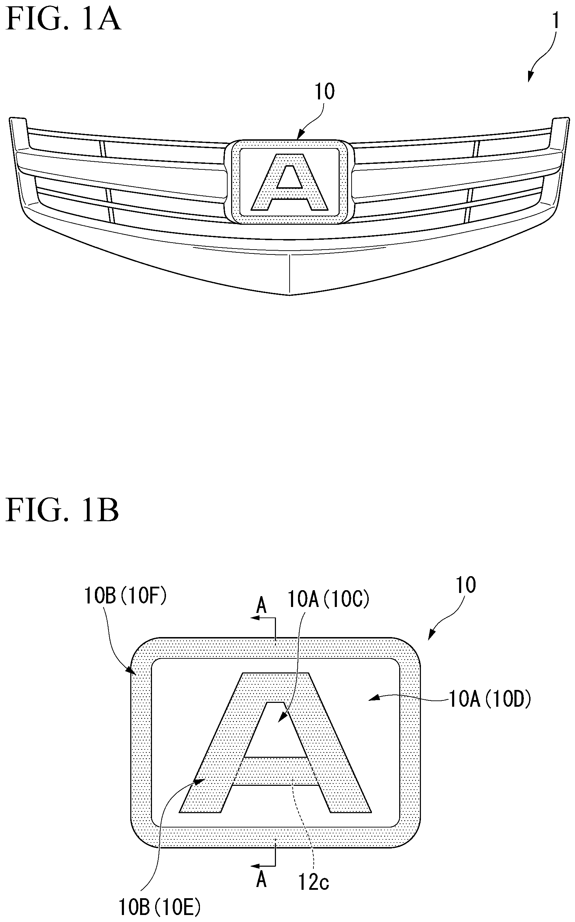

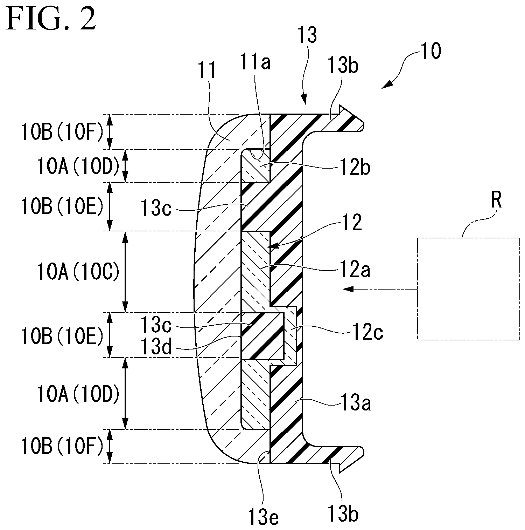

Fig. 1A is a front view of a radiator grill 1 including a radar cover 10 according to the present embodiment. In addition, Fig. 1B is an enlarged front view of the radar cover 10 according to the present embodiment. In addition, Fig. 2 is a view showing a cross section of the radar cover 10 of the present embodiment, and is a cross-sectional view taken along the line A-A of Fig. 1B.

The radiator grill 1 is provided on a front surface of a vehicle so as to close an opening leading to an engine room of the vehicle, and secures ventilation to the engine room and prevents foreign matter from entering the engine room. The radar cover 10 is provided in the center of the radiator grill 1 so as to face a radar unit R (see Fig. 2) disposed in the engine room. The radar unit R includes, for example, a transmission unit that emits millimeter waves, a reception unit that receives reflected waves, an arithmetic unit that performs arithmetic processing, and the like. The radar unit R performs transmission and reception of radio waves transmitted through the radar cover 10, and detects the peripheral states of the vehicle based on the received radio waves. For example, the radar unit R calculates and outputs the distance to an obstacle, the relative speed of an obstacle, and the like.

The radar cover 10 is disposed so as to cover the radar unit R when viewed from the front side of the vehicle. That is, the radar cover 10 is disposed such that a back surface thereof faces the radar unit R. As shown in Fig. 1B, the radar cover 10 is a component having a bright region 10A having a metallic luster and a black region 10B having black color when viewed from the front side of the vehicle.

As shown in Fig. 1B, the bright region 10A includes an island portion bright region 10C surrounded by the black region 10B and a peripheral bright region 10D surrounding the island portion bright region 10C apart from the island portion bright region 10C. In addition, the black region 10B includes a character-shaped black region 10E forming a character "A" and a frame-shaped black region 10F provided in a frame shape on an outer edge portion of the radar cover 10. That is, in the present embodiment, when viewed from the front side of the vehicle, the island portion bright region 10C is disposed in a central portion, the character-shaped black region 10E is disposed so as to surround the island portion bright region 10C from the outside, the peripheral bright region 10D is disposed so as to surround the character-shaped black region 10E from the outside, and the frame-shaped black region 10F is disposed so as to surround the peripheral bright region 10D.

In the present embodiment, an example in which the present invention is applied to the radar cover 10 having a design of the character-shape of "A" by having the character-shaped black region 10E forming the character "A" is described, but the present invention is not limited to this. The present invention can be applied to a radar cover in which a colored region has an island-shaped region and a peripheral region apart from the island-shaped region. For example, the present invention can be applied to a radar cover on which a figure or character indicating an emblem or the like of a vehicle manufacturer is formed.

As shown in Fig. 2, such a radar cover 10 includes a transparent member 11, an inner emblem 12 (colored core), and a base member 13 (support member). In the following description, a direction in which the transparent member 11, the inner emblem 12, and the base member 13 are laminated (a thickness direction of the radar cover 10 and an arrangement direction of the radar unit R and the radar cover 10) will be referred to as a laminating direction. In addition, a side of the radar cover 10 facing the outside of the vehicle in a state of being mounted on the vehicle is the front side, and a side of the radar cover 10 facing the inside of the vehicle in a state of being mounted on the vehicle is the back side.

The transparent member 11 is a substantially rectangular portion disposed on a frontmost side of the radar cover 10, and is formed of a transparent material (including colored transparent material) having radio wave transmission. A front side surface of the transparent member 11 is a smooth surface in order to enhance visibility of the inner emblem 12 from the outside of the vehicle. In addition, a recess portion 11a on which the inner emblem 12 is disposed is formed on a back surface (back side surface) of the transparent member 11.

The recess portion 11a is a portion to which the inner emblem 12 is fitted, and makes the housed inner emblem 12 three-dimensionally visible from the outside of the vehicle. The inner emblem 12 is housed in such a recess portion 11a, whereby the above-described bright region 10A (in the present embodiment, the island portion bright region 10C and the peripheral bright region 10D) is formed.

Such a transparent member 11 is formed of, for example, a transparent synthetic resin such as colorless polycarbonate (PC) or polymethyl methacrylate resin (PMMA), and has a thickness of about 1.5 mm to 10 mm. In addition, the front side surface of the transparent member 11 is subjected to a hard coat treatment or a clear coating treatment of urethane-based paint, as needed, to prevent scratch. In a case of a transparent synthetic resin having scratch resistance, these scratch-preventing treatments are unnecessary.

The inner emblem 12 is a member that forms the above-described bright region 10A, and includes an island portion 12a that forms the island portion bright region 10C and a peripheral portion 12b that forms the peripheral bright region 10D. The entire circumference of the island portion 12a is surrounded by a character-shaped portion 13c which is a part of the base member 13 when viewed from the above-described laminating direction. When viewed from the laminating direction, the entire circumference of the island portion 12a is surrounded by a part of the base member 13, and therefore is apart from the peripheral portion 12b. The peripheral portion 12b is a portion that surrounds the island portion 12a from the outside through the character-shaped portion 13c of the base member 13.

In the present embodiment, the inner emblem 12 has a connecting portion 12c that connects the island portion 12a and the peripheral portion 12b. The connecting portion 12c is embedded in the base member 13 when viewed from the laminating direction, and is a portion that is not visible from the front side of the radar cover 10 through the transparent member 11. Such a connecting portion 12c is disposed on the back surface side of the radar cover 10 with respect to the character-shaped portion 13c which is a part of the base member 13 in the present embodiment, and the front side thereof is covered with the character-shaped portion 13c.

In addition, in the present embodiment, the connecting portion 12c connects the back surface of the island portion 12a and the back surface of the peripheral portion 12b, and is disposed closer to the back surface of the base member 13 than the back surface of the island portion 12a and the back surface of the peripheral portion 12b. That is, the connecting portion 12c is connected to the back surface of the island portion 12a and the back surface of the peripheral portion 12b, and is disposed on the back surface side of the inner emblem 12 with respect to the island portion 12a and the peripheral portion 12b.

Although not shown in Fig. 2 or the like, such an inner emblem 12 has a base portion made of resin and a bright film having a metallic luster formed on the front surface side of the base portion. In addition, the inner emblem 12 has a base coat layer and a top coat layer, as needed.

The base portion is molded by injection molding or the like, and is formed of, for example, a synthetic resin such as ABS, PC, or PET. The base coat layer is formed between the base portion and the bright film, and is formed by clear coating using a transparent (including colored transparent) synthetic resin to improve the adhesion between the base portion and the bright film. The bright film is a layer having metal brightness disposed so as to cover the front side surface of the base portion, and is a metallic-colored thin film containing indium (In) or the like. The bright film is, for example, a discontinuous film having a large number of fine gaps, and is capable of transmitting radio waves through these gaps. The top coat layer is formed on the bright film so as to cover the bright film, is a layer that protects the bright film, and is formed by, for example, clear coating using a transparent (including colored transparent) synthetic resin. The base coat layer and the top coat layer may be a transparent ceramic coat layer containing silicon oxide (SiOx). In this case, higher heat resistance and higher radio wave transmission are obtained than those of the base coat layer or the top coat layer containing resin formed by clear coating or the like.

As described above, in the present embodiment, the island portion 12a is integrated with the peripheral portion 12b through the connecting portion 12c. Therefore, the inner emblem 12 is a single component having the island portion 12a, the peripheral portion 12b, and the connecting portion 12c. In addition, when the inner emblem 12 is viewed as a single body in the present embodiment, the region between the island portion 12a and the peripheral portion 12b is a penetration region penetrating in the above-described laminating direction, except the region where the connecting portion 12c is provided.

The base member 13 is a portion that is fixed to the back surface of the transparent member 11 and supports the inner emblem 12 from the back surface side of the transparent member 11, and is formed of a black resin material. The base member 13 includes a support substrate portion 13a, an engaging portion 13b, and the character-shaped portion 13c.

The support substrate portion 13a is a portion fixed to the back surface of the transparent member 11. An outer edge portion of the support substrate portion 13a viewed from the laminating direction is visible from the outside through the transparent member 11, and forms the frame-shaped black region 10F. In addition, the support substrate portion 13a is fixed to the back surface of the inner emblem 12 housed in the recess portion 11a of the transparent member 11, and supports the inner emblem 12 in a state where the surface thereof abuts an inner wall surface of the recess portion 11a.

The support substrate portion 13a is fixed to the back surface of the inner emblem 12 in a region avoiding the connecting portion 12c of the inner emblem 12. That is, the support substrate portion 13a is fixed to the back surface of the island portion 12a and the back surface of the peripheral portion 12b of the inner emblem 12. On the other hand, the support substrate portion 13a holds the connecting portion 12c of the inner emblem 12 so as to be housed inside.

The engaging portion 13b has a root connected to the back surface of the support substrate portion 13a and extends from the back surface side of the support substrate portion 13a to the radar unit R (engine room). A claw portion is formed at a tip of the engaging portion 13b. A plurality of such engaging portions 13b are provided with respect to the support substrate portion 13a, and the claw portion at the tip portion thereof is locked to, for example, a radiator grill main body.

The character-shaped portion 13c projects from the front side surface of the support substrate portion 13a toward the transparent member 11, and is a portion that embeds a space between the island portion 12a and the peripheral portion 12b of the inner emblem 12. The character-shaped portion 13c is visible from the outside through the transparent member 11, and forms the character-shaped black region 10E. The character-shaped portion 13c is provided so as to cover the connecting portion 12c of the inner emblem 12 when visually recognized from the outside through the transparent member 11, and surrounds the entire circumference of the island portion 12a of the inner emblem 12 from the outside.

A front side surface 13d of the character-shaped portion 13c is disposed so as to be flush with the front side surface of the inner emblem 12 (the front side surface of the island portion 12a and the front side surface of the peripheral portion 12b). That is, in the above-described laminating direction, the front side surface 13d of the character-shaped portion 13c is disposed at the same position as the front side surface of the island portion 12a of the inner emblem 12 and the front side surface of the peripheral portion 12b of the inner emblem 12. On the other hand, a front side surface 13e of the support substrate portion 13a is located on the back surface side with respect to the front side surface 13d of the character-shaped portion 13c. That is, in the radar cover 10 of the present embodiment, a surface position of the base member 13 located outside the peripheral portion 12b and a surface position of the base member 13 located between the peripheral portion 12b and the island portion 12a are different from each other when viewed from the laminating direction. Therefore, a range in which a side surface of the inner emblem 12 can be visually recognized from the outside is changed depending on a location of the inner emblem 12. In the present embodiment, the side surface of the inner emblem 12 can be visually recognized widely at a boundary portion between the frame-shaped black region 10F and the peripheral portion 12b. Therefore, the appearance of the inner emblem 12 can be changed depending on the surface position of the base member 13, and the degree of freedom of shaping by the inner emblem 12 is improved.

Such a base member 13 is made of a synthetic resin such as an acrylonitrile-butadiene-styrene copolymer synthetic resin (ABS), an acrylonitrile-ethylene-styrene copolymer synthetic resin (AES), acrylonitrile-styrene-acrylate (ASA), polybutylene terephthalate (PBT), colored PC, or polyethylene terephthalate (PET), or a composite resin thereof, and has a thickness of about 0.5 mm to 10 mm.

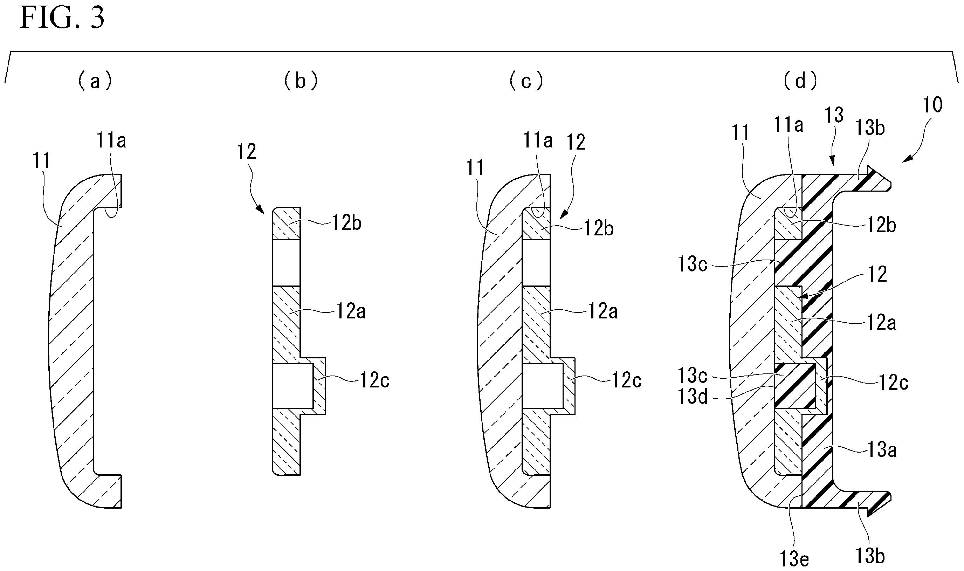

Subsequently, a method of manufacturing the radar cover 10 of the present embodiment will be described with reference to Fig. 3. Fig. 3 is a schematic view showing the method of manufacturing the radar cover 10 of the present embodiment. First, as shown in part (a) of Fig. 3, the transparent member 11 is formed. For example, the transparent member 11 is formed by injection molding. Since the transparent member 11 having the recess portion 11a can be formed by the injection molding, it is not necessary to form the recess portion 11a in the subsequent step. As needed, the front surface side (surface facing the outside of the vehicle) or the entire surface of the transparent member 11 may be subjected to a hard coat treatment for improving durability or the like. Such a step shown in part (a) of Fig. 3 is a transparent member forming step.

Next, as shown in part (b) of Fig. 3, the inner emblem 12 is formed. For example, the base portion of the inner emblem 12 is formed by injection molding. In addition, the base portion is subjected to clear coating and then dried to form a base coat layer. In addition, a bright film is formed on the base coat layer by sputtering or vacuum deposition. In addition, the surface of the bright film is subjected to clear coating and then dried to form a top coat layer. The inner emblem 12 need not be formed after the transparent member 11 shown in part (a) of Fig. 3 is formed. By forming the inner emblem 12 in parallel with the step of forming the transparent member 11 shown in part (a) of Fig. 3, a manufacturing time of the radar cover 10 can be shortened. The step shown in part (b) of Fig. 3 is an inner emblem (colored core) forming step of forming the inner emblem 12 having the island portion 12a, the peripheral portion 12b, and the connecting portion 12c.

Next, as shown in part (c) of Fig. 3, the inner emblem 12 is disposed on the recess portion 11a of the transparent member 11. In this case, the inner emblem 12 is not fixed to the recess portion 11a of the transparent member 11, but merely abuts the recess portion 11a. The step shown in part (c) of Fig. 3 corresponds to an inner emblem disposition step. That is, by the step shown in part (c) of Fig. 3, the inner emblem 12 is disposed on the transparent member 11 without being fixed thereto.

Next, as shown in part (d) of Fig. 3, the base member 13 is formed. Here, the base member 13 is formed by disposing the transparent member 11 in which the inner emblem 12 is installed in the recess portion 11a in the inside of a mold for injection molding and performing insert molding to inject molten resin onto the back surface side of the transparent member 11. Such a base member 13 is welded to the transparent member 11 by heat during insert molding, and is disposed so as to cover the inner emblem 12. As a result, the inner emblem 12 is fixed to the transparent member 11 in a state of abutting on the inner wall surface of the recess portion 11a. Such a step shown in part (d) of Fig. 3 is a base member (support member) forming step.

In the present embodiment, as shown in part (d) of Fig. 3, by forming the base member 13 by insert molding as described above, the resin flows into a gap between the island portion 12a and the peripheral portion 12b of the inner emblem 12, and the character-shaped portion 13c of the base member 13 is also formed. In this case, since the resin flows into both sides of the connecting portion 12c of the inner emblem 12 in the above-described laminating direction, the connecting portion 12c is finally embedded in the base member 13.

The radar cover 10 of the present embodiment is manufactured by the above steps. The radar cover 10 of the present embodiment as described above includes the transparent member 11, the base member 13 that is disposed on the back surface of the transparent member 11 and supports the transparent member 11, and the inner emblem 12 that is disposed between the transparent member 11 and the base member 13, in which the inner emblem 12 includes the island portion 12a of which a periphery is surrounded by a part of the base member 13 when viewed from the above-described laminating direction, the peripheral portion 12b that is disposed apart from the island portion 12a when viewed from the laminating direction, and the connecting portion 12c that is embedded in the base member 13 and connects the island portion 12a and the peripheral portion 12b when viewed from the laminating direction. According to the radar cover 10 of the present embodiment, the island portion 12a and the peripheral portion 12b of the inner emblem 12 are connected in a region (that is, inside the base member 13) that is not visible from the outside, and the island portion 12a can be integrated with the peripheral portion 12b. Therefore, according to the radar cover 10 of the present embodiment, it is not necessary to manufacture and manage an individual inner emblem for each island portion 12a, and it is possible to easily form an island-shaped colored region of which a periphery is surrounded by the base member 13 and which has a metallic color or the like.

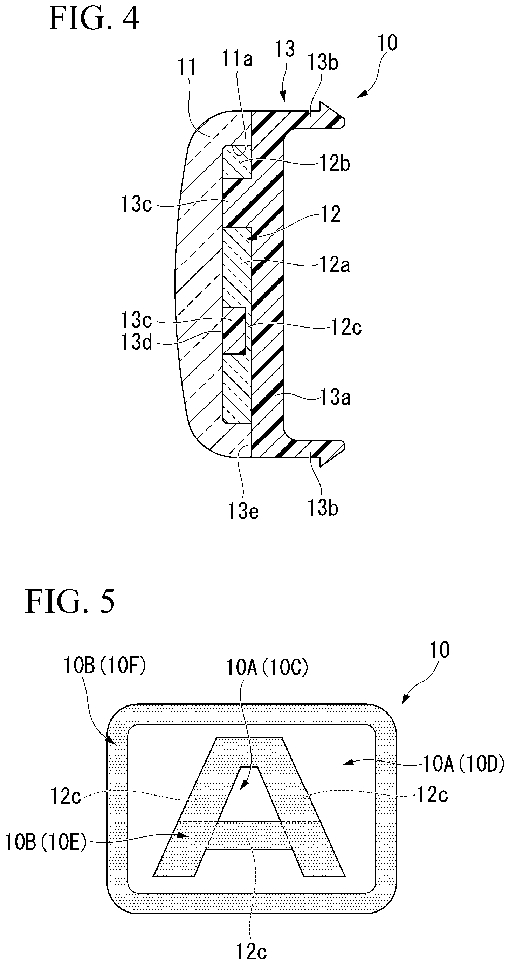

In addition, in the radar cover 10 of the present embodiment, the connecting portion 12c connects the back surface of the island portion 12a and the back surface of the peripheral portion 12b, and is disposed closer to the back surface of the base member 13 than the back surface of the island portion 12a and the back surface of the peripheral portion 12b. For example, as shown in Fig. 4, it is also possible to adopt a configuration in which the connecting portion 12c is connected to the side surface of the island portion 12a and the side surface of the peripheral portion 12b. Note that, when such a configuration is adopted, a thickness dimension of the connecting portion 12c may have to be reduced in order to secure a thickness dimension of the character-shaped portion 13c of the base member 13. In contrast, according to the radar cover 10 of the present embodiment, the connecting portion 12c can be embedded in the support substrate portion 13a of the base member 13, and a sufficiently large thickness dimension of the connecting portion 12c can be secured. Therefore, the strength of the inner emblem 12 can be enhanced. In addition, by disposing the connecting portion 12c closer to the back surface of the base member 13, a long distance from the connecting portion 12c to the transparent member 11 can be secured. Therefore, when the base member 13 is formed by insert molding, the resin easily flows into a region between the connecting portion 12c and the transparent member 11, and the character-shaped portion 13c can be formed more reliably.

In addition, in the radar cover 10 of the present embodiment, the surface position of the base member 13 located outside the peripheral portion 12b and the surface position of the base member 13 located between the peripheral portion 12b and the island portion 12a are different from each other when viewed from the laminating direction. Therefore, the range in which the side surface of the inner emblem 12 can be visually recognized from the outside can be changed depending on the location of the inner emblem 12, and the inner emblem 12 can be visually recognized more three-dimensionally.

Although the preferred embodiment of the present invention has been described above with reference to the accompanying drawings, the present invention is not limited to the above embodiment. Various shapes, combinations, and the like of the components shown in the above-described embodiment are merely examples, and can be variously changed based on design requirements and the like within the scope defined in the claims.

For example, in the above embodiment, a configuration in which one connecting portion 12c is provided for one island portion 12a has been described. However, the present invention is not limited to this. For example, as shown in Fig. 5, it is also possible to adopt a configuration in which a plurality of the connecting portions 12c are connected to one island portion 12a (island portion bright region 10C). By adopting such a configuration, the island portion 12a is connected to the peripheral portion 12b by the plurality of connecting portions 12c. Therefore, the island portion 12a can be positioned more firmly with respect to the peripheral portion 12b. Therefore, for example, when the base member 13 is formed by insert molding, it is possible to prevent the island portion 12a from being displaced due to the flow of molten resin or sink marks in a cooling state.

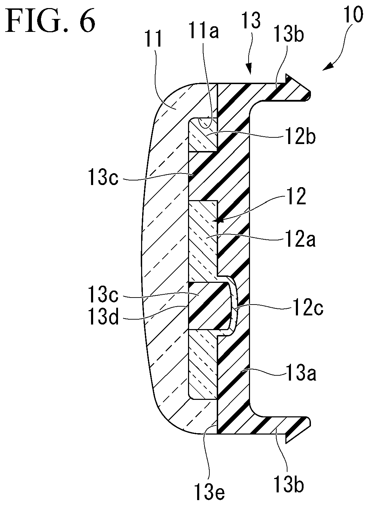

In addition, in the above-described embodiment, a configuration in which the connecting portion 12c has a flat plate shape as shown in Fig. 2 has been described. However, the present invention is not limited to this. For example, as shown in Fig. 6, it is also possible to adopt a configuration in which the connecting portion 12c is curved. By adopting such a configuration, when the base portion of the inner emblem 12 is formed by injection molding, molten resin can be smoothly guided to a space where the island portion 12a is formed.

### [Industrial Applicability]

According to the radar cover of the present invention, it is not necessary to manufacture and manage an individual colored core for each island portion, and it is possible to easily form an island-shaped colored region of which a periphery is surrounded by the support member and which has a metallic color or the like.

### [Reference Signs List]

- 1:: Radiator grill
- 10:: Radar cover
- 10A:: Bright region
- 10B:: Black region
- 10C:: Island portion bright region
- 10D:: Peripheral bright region
- 10E:: Character-shaped black region
- 10F:: Frame-shaped black region
- 11:: Transparent member
- 11a:: Recess portion
- 12:: Inner emblem (colored core)
- 12a:: Island portion
- 12b:: Peripheral portion
- 12c:: Connecting portion
- 13:: Base member (support member)
- 13a:: Support substrate portion
- 13b:: Engaging portion
- 13c:: Character-shaped portion
- R:: Radar unit

## Claims

1. A radar cover comprising:
a transparent member;
a support member that is disposed on a back surface of the transparent member and supports the transparent member; and
a colored core that is disposed between the transparent member and the support member,
wherein the colored core includes
an island portion of which a periphery is surrounded by a part of the support member when viewed from a laminating direction of the transparent member, the colored core, and the support member,
a peripheral portion that is disposed apart from the island portion when viewed from the laminating direction, and
a connecting portion that is embedded in the support member and connects the island portion and the peripheral portion when viewed from the laminating direction.

2. The radar cover according to Claim 1,
wherein the connecting portion connects a back surface of the island portion and a back surface of the peripheral portion, and is disposed closer to a back surface of the support member than the back surface of the island portion and the back surface of the peripheral portion.

3. The radar cover according to Claim 1,
wherein a plurality of the connecting portions are connected to one island portion.

4. The radar cover according to Claim 1,
wherein a surface position of the support member located outside the peripheral portion and a surface position of the support member located between the peripheral portion and the island portion are different from each other when viewed from the laminating direction.

5. The radar cover according to Claim 2,
wherein a plurality of the connecting portions are connected to one island portion.

6. The radar cover according to Claim 2,
wherein a surface position of the support member located outside the peripheral portion and a surface position of the support member located between the peripheral portion and the island portion are different from each other when viewed from the laminating direction.

7. The radar cover according to Claim 3,
wherein a surface position of the support member located outside the peripheral portion and a surface position of the support member located between the peripheral portion and the island portion are different from each other when viewed from the laminating direction.

8. The radar cover according to Claim 5,
wherein a surface position of the support member located outside the peripheral portion and a surface position of the support member located between the peripheral portion and the island portion are different from each other when viewed from the laminating direction.
